Europäisches Patentamt

European Patent Office

Office européen des brevets

(19)

(11) Publication number: **0 254 440 B1**

# (12) EUROPEAN PATENT SPECIFICATION

(45) Date of publication of patent specification: **27.12.91**  (51) Int. Cl.⁵: **G01S 7/52**, G01S 7/62, G01S 15/89

(21) Application number: **87305843.2**

(22) Date of filing: **01.07.87**

(54) **Data handling apparatus.**

(30) Priority: **01.07.86 US 880769**

(43) Date of publication of application:
**27.01.88 Bulletin 88/04**

(45) Publication of the grant of the patent:
**27.12.91 Bulletin 91/52**

(84) Designated Contracting States:
**DE FR GB NL**

(56) References cited:
**EP-A- 0 222 913
US-A- 4 136 325
US-A- 4 212 072
US-A- 4 398 540**

(73) Proprietor: **Hewlett-Packard Company
Mail Stop 20 B-O, 3000 Hanover Street
Palo Alto, California 94304(US)**

(72) Inventor: **Leavitt, Steven C.
20 Freedom Hill Road
Hampstead New Haven 03841(US)**

(74) Representative: **Williams, John Francis et al
WILLIAMS, POWELL & ASSOCIATES 34
Tavistock Street
London WC2E 7PB(GB)**

## Description

Background of the Invention

In ultrasonic systems for producing an image of the structures of tissue in a cross-section of a patient's body, ultrasonic pulses are transmitted into the body along each of a plurality of lines passing through the section, and the brightness of the image is made to relate to the amplitude of the returning echoes. The time it takes to attain data for one cross-sectional image depends on the speed with which sound travels through the body, the number of lines used and the maximum range of interest. In order to attain images that appear to smoothly change from one frame to the next, the frame rate is chosen to be about 30 Hertz.

When, however, it is desired to use this same apparatus for the purpose of forming a flow map having a hue and possibly a brightness indicative of the direction and velocity of blood flowing through the cross-section, it is necessary to transmit n additional pulses along each line so that it take n + 1 times longer to acquire the structural and velocity data for a given cross-section than it does to acquire data for the structure of the tissue. If the data is written into a display memory on a line-by-line basis as it is received and the display memory is scanned at the frame rate of a standard monitor, the update boundary between new and old data rolls through the image like a windshield wiper. On the other hand, if data is stored in a buffer and the buffer is scanned during each display frame, the images exhibit a very noticeable disconnected jerky motion because the data is attained at 1/n + 1 times the frame rate of the monitor. Such abrupt changes are especially disconcerting in a flow map of blood velocity because blood flow should appear continuous and move with a fluid-like motion.

US Patent Specification 4136325 discloses a circuit used in an ultrasonic wave transmitting and receiving apparatus which can be used for real-time display of the interior of a living body. It employs an interpolation technique to smooth out the display. It does not, however, address the problem of displaying differentially those portions of the scanned area which represents flesh and those which represent moving blood.

Brief Summary of the Invention

In accordance with this invention, there is provided data handling apparatus adapted for use in displaying ultrasonically derived images of both body tissue structure and blood flow, said apparatus providing output display signals, which are to be displayed at a given frame rate, from input data signals received at a lower frame rate, successive input data signals being stored sequentially in memory means $(B_1, B_2, B_3)$, the output display signal representing instants between two successive input data signals already received corresponding to an interpolation provided by interpolation means (22) of said input signals, wherein the first n input data signals represent blood flow which is displayed as moving at said given frame rate, and wherein every nth + 1 input data signal represents body tissue structure which is displayed as static and is not subject to an interpolation process. Thus, the earlier of two consecutive data frames for blood flow velocity is presented in a first display frame of a monitor, the later data frame is presented in a display frame that is separated from the first by a number of intermediate display frames, and interpolated values of the consecutive data fames are displayed in the intermediate display frames. If the monitor displays frames at a rate that is an integral number n times the frame rate at which the data for blood velocity is acquired, the number of intermediate data frames is n-1. The data used can be raw data or interpolated values thereof provided by a scan converter.

In a preferred embodiment of the invention, frames of data such as that representing velocity, which could also include turbulence information, are respectively stored in one of three frame buffers in repeated sequence so that, for example, velocity data frames $V_1, V_2, V_3, V_4$ etc., are respectively written into frame buffers $B_1, B_2, B_3, B_1$ etc. Thus, only one frame buffer is written into at a time. A circuit is provided for selecting the two frame buffers not being written into and reading the data in them so as to provide data from the buffer having the earlier data $V_e$ at one output and the data from the buffer having the later date $V_L$ at another output. An interpolation ROM is connected to receive $V_E$ and $V_L$ at different inputs, and it outputs the desired interpolated values to the display memory. If, for examples n = 3, the output might be $V_E$ during a display frame $DF_A$; $2/3\ V_E + 1/3\ V_L$ during the next display frame $DF_B$; $1/3\ V_E + 2/3\ V_L$ during the next display frame $DF_C$; and $V_L$ during a last display frame of the sequence $DF_D$.

The following table shows the writing and reading sequence of the buffers:

| B₁ | B₂ | B₃ |
|----|----|----|
| W | R | R |
| R | W | R |
| R | R | W |

## Brief Description of the Drawings

FIGURE 1 illustrates the display of data frames in accordance with the prior art;
FIGURE 2 illustrates the display of data frames in accordance with this invention; and
FIGURE 3 is a block diagram of an ultrasonic system incorporating this invention.

## Detailed Description of the Invention

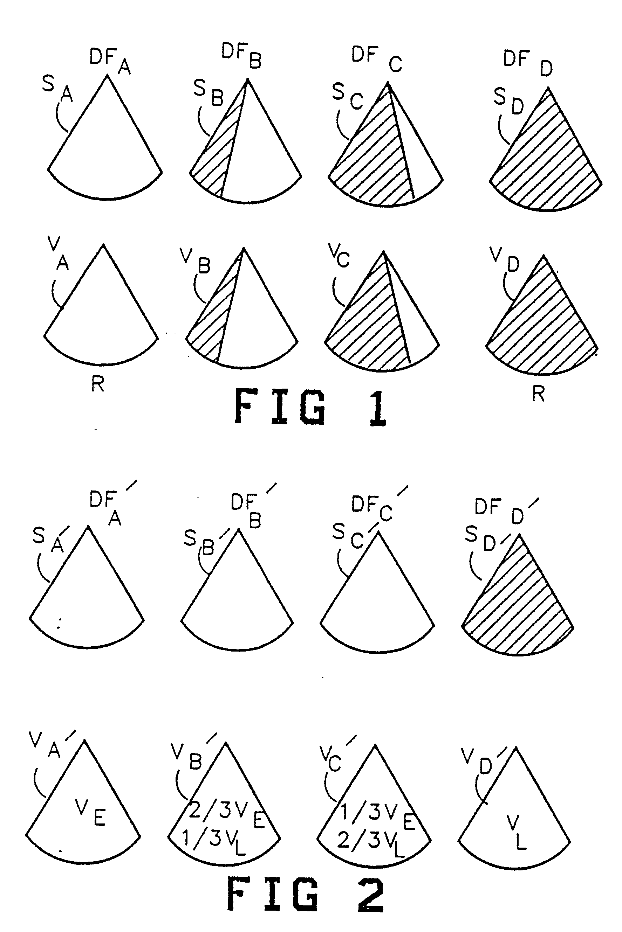

In order that the differences between the manner in which prior apparatus and the apparatus using this invention display data that is acquired at a frame rate that is an integral fraction of the frame rate at which it is to be displayed may be clearly understood, reference is made to FIGURE 1 which illustrates the operation of the prior art.

The columns $DF_A$, $DF_B$, $DF_C$ and $DF_D$ indicate successive display frame intervals; the sectors $S_A$, $S_B$, $S_C$ and $S_D$ show the data respectively stored in the display memory for the monochrome structural image at the beginning of these display frame intervals; and the sectors $V_A$, $V_B$. $V_C$ and $V_D$ show the data respectively stored in the display memory for the colored velocity image at the beginning of the display frame intervals. The clear areas show data derived from an earlier of two consecutive data frames, and the shaded areas show data derived from the later of the two data frames. As this is just an instant of time, the update line between the shaded and clear areas is in a particular position; but because the information is being written into the display memories on a line by line basis, the update line will pass through the image like a windshield wiper as previously stated.

FIGURE 2 illustrates the displays of consecutive velocity data frames in accordance with this invention and another way in which the prior art displays structural data. The columns $DF_A'$, $DF_B'$, $DF_C'$ and $DF_D'$ represent successive display frame intervals; the sectors $S_A'$, $S_B'$, $S_C'$ respectively show what is in the display memory for the monochrome image of tissue structure; and the sectors $V_A'$, $V_B'$, $V_C'$, and $V_D'$ respectively show what is in the display memory for the colored image of velocity. The structural data can be displayed so as to exhibit the windwhield wiper effect or it can be displayed as indicated by the clear and shaded areas so as to exhibit noticeable flicker; but the data written into the display memory for velocity is displayed in accordance with the invention so as to be free from the windshield wiper effect and flicker. It is also possible to display the structural data in accordance with the invention. During a display frame $DF_A'$, the velocity data in the display memory is entirely from the earlier of two consecutive display frames; during the entire display frame $DE_B'$, the data in the display memory is an interpolation of the data from the earlier and later data frames, e.g., 2/3 of data from the earlier frame and 1/3 of the data from the later data frame; during the entire display frame $DF_C'$, the data in the display memory is a different interpolation of the data from the earlier and later display frames, e.g., 1/3 of the former and 2/3 of the latter; and during the display frame $DF_D'$, the data in the display memory is entirely from the later data frame. As there is no convenient way in the drawing of shading $V_A'$ through $V_D'$ to show the data values used, the values just referred to are simply written as characters into the appropriate sectors in the drawing. As will be explained, this is possible because the data written into the display memory is derived from data stored in buffers rather than being data provided directly from the scanning process. There is no update line in the display memory and the change in colour from that representing the velocity in the earlier data frame to that representing the velocity in the later data frame is gradual so as to provide a cloud-like motion of the blood that is more realistic.

Stated in another way, successive data frames respectively occur at the same times as spaced display frames and respectively control the image during these display frames. During the intervening display frames, interpolated values of the data in the two data frames are displayed.

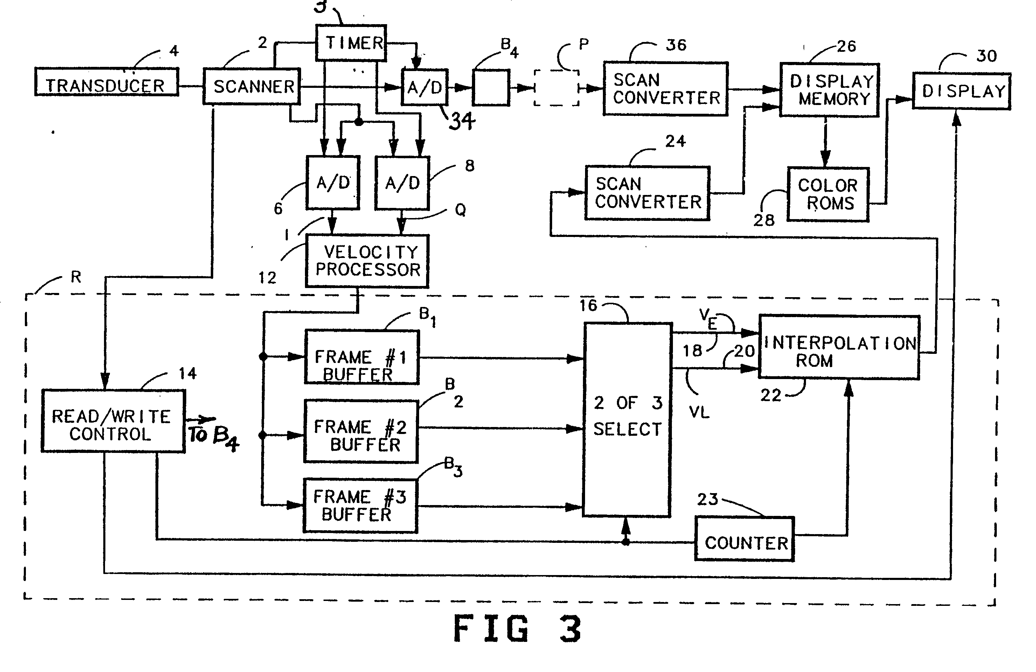

Reference is now made to the embodiment of the invention. illustrated by the block diagram of FIGURE 3. A scanner 2 that is synchronized with a timer 3 applies pulses of ultrasonic waves to the crystals of a transducer 4 of the phased array type with such timing as to cause them to successively direct an acoustic beam along the radial paths of a sector. The scanner 2 also delays the electrical waves produced by echoes of the transmitted pulses so as to provide receive focussing. After n ultrasonic pulses have been transmitted along a radial line to derive velocity data, a single pulse is transmitted along it to derive structural data for the tissue. Separate velocity lines and structural lines are used because the pulse characteristics necessary for each are generally different.

The focussed echoes of the n pulses are applied to A/D devices 6 and 8 that sample the echoes under the control of the timer 3 at the desired Nyquist rate in phase quadrature, thereby producing respective I and Q signals that are applied to a velocity processor 12. The I and Q filtered information from the first n-1 pulses are stored in memory, not shown, and as the $n^{th}$ set of I and Q signals are being received, the processor 12 outputs digital signals successively representing the velocity of reflectors along the radial line. As the velocity signals from each line of a sector are derived, a READ/WRITE control 14 that is synchronized with the scanner 2 causes the signals for each frame to be written into frame buffers $B_1$, $B_2$ and $B_3$ in repeated consecutive sequence so that velocity data frames $V_1$, $V_2$, $V_3$, $V_4$, etc., are respectively written into the buffers $B_1$, $B_2$, $B_3$, $B_1$, etc. While one of the buffers $B_1$, $B_2$ or $B_3$ is being written into, the pair of buffers not being written into are read, as will be described. Thus, when $B_1$ is being written into, the buffers $B_2$ and $B_3$ are read; when $B_2$ is being written into, $B_1$ and $B_3$ are read; and when $B_3$ is being written into, $B_1$ and $B_2$ are read. The READ/WRITE control 14 controls a 2-of-3 selector 16 that reads the buffers not being written into. If, for example, data is written into the frame buffers $B_1$, $B_2$ and $B_3$ in sequence and velocity data is being written into $B_1$, the selector 16 outputs the data read from $B_2$ on one line 18 and the data read from $B_3$ on another line 20. Thus, the data on the line 18 is from an earlier data frame $V_E$ and the data on line 20 is from a later data frame $V_L$.

The lines 18 and 20 are respectively connected to two inputs of an interpolation ROM 22. If the number n of pulses used to derive velocity data is 3, the ROM 22, which is synchronized by the READ/WRITE control 14 via a counter 23, may output the velocity signals read from $B_2$ during the display frame $DF_A$; 2/3 of the signal read from $B_2$ and 1/3 of the velocity signal read from $B_3$ during the display frame $DF_B$; 1/3 of the velocity signal read from $B_2$ and 2/3 of the velocity signal read from $B_3$ during the display frame $DF_C$; and just the signals read from $B_3$ during the display frame $DF_D$.

The output of the interpolation ROM 22 is supplied to a scan converter 24 that may operate as described in U.S. Patent No. 4,471,449 assigned to Hewlett-Packard Company. The output of the scan converter 24 is applied to a display memory 26 and its output is applied to a color select ROMs 28 that provide signals required to produce the intensity and hue of the color that is to represent the velocity, e.g., as described in U.S. patent application Serial No. 748,531, filed on June 25, 1985, entitled "Flow Mapping Apparatus" or in U.S. patent application Serial No. 837,456, filed on March 7, 1986, entitled "Improved Method for Combining Color Flow Map and Monochrome Image". Both the referenced patent applications are filed in the name of David Lipschutz. The output of the ROMs 28 are applied to a display means 30 that is synchronized by the READ/WRITE control 14.

The particular operation just described is for a situation where three pulses are transmitted along each line to derive the velocity signals, so that n = 3, but in general n-1 display frames require interpolations of the velocity signals stored in each of the pair of frame buffers $B_1$, $B_2$ and $B_3$ being read from. Thus, if n = 4, three display frames would occur between the data frames so that their interpolated values might be 1/4 $V_E$, 3/4 $V_L$; 1/2 $V_E$, 1/2 $V_L$; and 1/4 $V_E$, 3/4 $V_L$.

The monochrome display of the display means 30 that represents tissue structure may be produced as follows. The analog signal corresponding to the amplitude of the echoes of the single pulse referred to from structures along each radial line is supplied to an A/D device 34 that samples them at times determined by the timer 3, and the output of the A/D device 34 for the first data frame is caused to be written into a frame buffer $B_4$ by the READ/WRITE control 14. The output of the buffer $B_4$ is applied to a scan converter 36 that may operate as the scan converter 24, and its output is supplied to the display memory 26. Thus, the update line described in connection with FIGURE 1 is eliminated, but there is an abrupt change between the display frames $DF_{C'}$ and $DF_{D'}$ equal to the difference between the data in the successive data frames. If it is desired to eliminate this abrupt change, the circuits of this invention, which are included within a dashed rectangle R, could be inserted as indicated at R' and the frame buffer $B_4$ could be eliminated.

The ROM 22 could drive the interpolated data in the following manner. In the illustrated system where n = 3, three different values of data selected from the earlier and later data frames $V_E$ and $V_L$ are required: $V_E$; 2/3 $V_E$ and 1/3 $V_L$; and 1/3 $V_E$ and 2/3 $V_L$. Assume that velocity data is written into the frame buffers in the order $B_1$, $B_2$ and $B_3$ and that data is being written into $B_1$ so that $B_2$ contains the earlier frame of data and $B_3$ contains the later frame of data. While the next frame of data is being written into $B_1$, the READ/WRITE control 14 provides a pulse that causes the 2-of-3 selector 16 to read data from $B_2$ and $B_3$ and output it as the earlier and later frames respectively. During this time, three display frames $DF_{A'}$, $DF_{B'}$ and $DF_{C'}$ occur. The pulses provided to the 2-of-3 selector 16 are coupled via the counter 23 that outputs a count 0,0 during display frame $DF_{A'}$ as data is being written into the first third of $B_1$, a count of 0,1 during

display frame DF$_{B'}$ while data is being written into the second third of B$_1$; and a count of 1,0 during display frame DF$_{C'}$ while data is being loaded into the last third of B$_1$. At the end of the frame of data being written into B$_1$, the READ/WRITE control 14 causes the next frame of data to be written into B$_2$ so that B$_3$ and B$_1$ are selected by the 2-of-3 selector 16 with B$_3$ containing the earlier frame. The count provided by the counter is again 0,0 so that the data in B$_3$ which was the previous later frame is now the earlier frame and is read so as to supply data to the scan converter 24. This sequence is shown in the table below.

| COUNT | |
|---|---|
| 0,0 | early frame |
| 0,1 | 2/3 early frame, 1/3 late frame |
| 1,0 | 1/3 early frame, 2/3 late frame |
| 0,0 | new early frame = former late frame |

One skilled in the art would have no difficulty in programming the ROM 22.

## Claims

1. Data handling apparatus adapted for use in displaying ultrasonically derived images of both body tissue structure and blood flow, said apparatus providing output display signals, which are to be displayed at a given frame rate, from input data signals received at a lower frame rate, successive input data signals being stored sequentially in memory means (B$_1$, B$_2$, B$_3$), the output display signal representing instants between two successive input data signals already received corresponding to an interpolation provided by interpolation means (22) of said input signals, wherein the first n input data signals represent blood flow which is displayed as moving at said given frame rate, and wherein every nth + 1 input data signal represents body tissue structure which is displayed as static and is not subject to an interpolation process.

2. Data handling apparatus as claimed in Claim 1, wherein the output display signal representing each specific input data signal corresponds directly to that input data signal.

3. Data handling apparatus as claimed in Claim 1 or 2 wherein the frequency of the output display signal is an integral multiple of the frequency of the input data signal receipt.

4. Data handling apparatus as claimed in any preceding claim wherein the output display signals are supplied to a display memory (26) prior to application to display means (30).

5. Data handling apparatus as claimed in any preceding claim wherein said memory means comprises three memory buffers (B$_1$, B$_2$, B$_3$) which receive input data signals in strict sequence, and wherein data is read for the purpose of providing said interpolation under control of a selector (16) from those two buffers at any time not receiving an input data signal.

6. Data handling as claimed in any preceding claim wherein each interpolation output display signal is a signal weighted between the two successive input signals according to the position in time of the respective instant between the times of the two input signals.

## Revendications

1. Appareil de traitement de données apte à être utilisé pour l'affichage d'images dérivées de manière ultrasonique tant d'une structure de tissu corporel que d'un flux sanguin, ledit appareil fournissant les signaux d'affichage de sortie qui sont affichés à une fréquence de trame donnée, à partir de signaux donnés d'entrée reçus à un fréquence de trame plus faible, des signaux successifs de données d'entrée étant mémorisés en séquence dans des moyens de mémoire, (B$_1$, B$_2$, B$_3$), le signal de sortie représentant des instants entre deux signaux successifs de données d'entrée déjà reçus correspondant à une interpolation réalisée par des moyens (22) d'interpolation desdits signaux d'entrée, dans lequel les n premier signaux de données d'entrée représentent un flux sanguin qui est affiché comme se déplaçant à ladite fréquence de trame donnée, et dans lequel chaque (n + 1)-ième signal de données représente une structure de tissu corporel qui est affichée comme statique et qui n'est pas soumise à processus d'interpolation.

2. Appareil de traitement de données selon la revendication 1, dans lequel le signal d'affichage de sortie représentant chaque signal spécifique de données d'entrée correspond directement à ce signal de données d'entrée.

3. Appareil de traitement de données selon la revendication 1 ou 2 dans lequel la fréquence de signal d'affichage de sortie est un multiple entier de la fréquence de la réception de signaux de données d'entrée.

4. Appareil de traitement de données selon une revendication précédente quelconque dans lequel les signaux d'affichage de sortie sont amenés à une mémoire (26) d'affichage avant d'être appliqués à un moyen d'affichage (30).

5. Appareil de traitement de données selon une revendication précédente quelconque dans lequel ledit moyen de mémoire comprend trois tampon de mémoire ($B_1$, $B_2$, $B_3$) qui reçoivent des signaux de données d'entrée en séquence stricte et dans lequel une donnée est lue dans le but de réaliser ladite interpolation sous commande dans un sélecteur (16) à partir des deux tampons qui, à un instant quelconque, ne reçoivent aucun signal de données d'entrée.

6. Traitement de données selon une revendication précédente quelconque dans lequel chaque signal d'affichage de sortie d'interpolation est un signal pondéré entre les deux signaux successifs d'entrée selon la position dans le temps de l'instant respectif entre les instants des deux signaux d'entrée.

## Patentansprüche

1. Datenverarbeitungsgerät für die Darstellung von durch Ultraschall abgeleiteten Bildern sowohl von Körpergewebestrukturen, als auch des Blutflusses, wobei dieses Gerät Ausgangs-Bildsignale liefert, die mit einer gegebenen Vollbildfrequenz dargestellt werden sollen, aufeinanderfolgende Eingangs-Datensignale in Speichern (B1,B2,B3) sequentiell gespeichert werden, die Ausgangs-Bildsignale Zeitpunkte Zwischen zwei bereits empfangenen Eingangs-Datensignalen entsprechend einer Interpolation dieser Eingangssignale durch eine Interpolationsvorrichtung (22) darstellen, wobei die ersten n Eingangs-Datensignale den Blutfluß darstellen, der mit der gegebenen Vollbildfrequenz in Bewegung abgebildet ist, und bei dem jedes (n + 1)-te Signal die Körpergewebestruktur darstellt, die statisch abgebildet und keiner Interpolation unterworfen ist.

2. Datenverarbeitungsgerät nach Anspruch 1, bei dem das Ausgangs-Bildsignal, das ein spezifisches Eingangs-Datensignal darstellt, diesem Eingangs-Datensignal unmittelbar entspricht.

3. Datenverarbeitungsgerät nach Anspruch 1 oder 2, bei dem die Frequenz des Ausgangs-Bildsignales ein ganzzahliges Vielfaches der Frequenz des Eingangs-Datensignal-Empfangs ist.

4. Datenverarbeitungsgerät nach einem der vorangehenden Ansprüche 1 bis 3, bei dem die Ausgangs-Bildsignale vor ihrer Übertragung zu einem Anzeigegerät (30) an einen Bildspeicher (26) übergeben werden.

5. Datenverarbeitungsgerät nach einem der vorangehenden Ansprüche, bei dem der Speicher drei Pufferspeicher (B1, B2, B3) aufweist, die die Eingangs-Datensignale in fester Reihenfolge empfangen, und bei dem Daten gelesen werden, um gesteuert von einem Selektor (16) die Interpolationswerte aus denjenigen zwei Puffern bereitzustellen, die zu jeder Zeit keine Eingangs-Datensignale empfangen.

6. Datenverarbeitungsgerät nach einem der vorangehenden Ansprüche, bei dem jedes interpolierte Ausgangs-Bildsignal ein zwischen den beiden aufeinanderfolgenden Eingangssignalen nach dem Zeitpunkt gewichtetes Signal ist, der die Lage im Zeitintervall zwischen den zwei Eingangssignalen bestimmt.

FIG 1

FIG 2

FIG 3